(19) Europäisches Patentamt
European Patent Office
Office européen des brevets

(11) Veröffentlichungsnummer: **0 017 810**
**B1**

# (12) EUROPÄISCHE PATENTSCHRIFT

(45) Veröffentlichungstag der Patentschrift: **29.06.83**

(51) Int. Cl.³: **A 01 N 43/74**

(21) Anmeldenummer: **80101588.4**

(22) Anmeldetag: **26.03.80**

## (54) Schädlingsbekämpfungsmittel, die substituierte Benzazole enthalten, und deren Verwendung.

(30) Priorität: **04.04.79 DE 2913527**

(43) Veröffentlichungstag der Anmeldung: **29.10.80 Patentblatt 80/22**

(45) Bekanntmachung des Hinweises auf die Patenterteilung: **29.06.83 Patentblatt 83/26**

(84) Benannte Vertragsstaaten: **AT BE CH DE FR GB IT NL SE**

(56) Entgegenhaltungen:
**DE - A - 2 355 092**
**FR - A - 840 003**
**US - A - 2 766 922**
**US - A - 3 641 245**

(73) Patentinhaber: **BAYER AG**
**Zentralbereich Patente, Marken und Lizenzen**
**D-5090 Leverkusen 1, Bayerwerk (DE)**

(72) Erfinder: **Mues, Volker, Dr.**
**Gellertweg 13**
**D-5600 Wuppertal 1 (DE)**
Erfinder: **Behrenz, Wolfgang, Dr.**
**Untergründemich 14**
**D-5063 Overath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 017 810 B1

Schädlingsbekämpfungsmittel, die substituierte Benzazole enthalten, und deren Verwendung

Die Erfindung betrifft neue insektizide und akarizide synergistische Wirkstoffkombinationen aus teilweise bekannten substituierten Benzazolen und anderen bekannten insektiziden und/oder akariziden Wirkstoffen.

Es ist bereits bekannt, daß die folgenden Wirkstoffe bzw. Wirkstoffgruppen pestizide, insbesondere insektizide und akarizide Eigenschaften besitzen:

A) Carbamate, wie z.B. das 2-iso-Propoxy-phenyl-N-methyl-carbammat, 3,4,5-Trimethyl-phenyl-N-methyl-carbamat, 1-Naphthyl-N-methylcarbamat, 2,3-Dihydro-2,2-dimethyl-7-benzofuranyl-N-methylcarbamat, 2-(1,3-Dioxolan(2)yl-phenyl)-N-methyl-carbamat und 2,2-Dimethyl-1,3-benzodioxol(4)yl-N-methyl carbamat,

B) Carbonsäureester, wie z.B. 2,3,4,5-Tetrahydro-phthalimido-methyl-chrysanthemat und (5-Benzyl-3-furyl)-methyl-2,2-dimethyl-3-(2-methyl-propenyl)-cyclopropan-carboxylat,

C) Phosphorsäureester, wie z.B. 0,0-Dimethyl-0-(2,2-dichlorvinyl)-phosphorsäureester und

D) Halogenalkane, wie z.B. 1,1,1-Trichlor-2,2-bis-(4-methoxyphenyl)-äthan und 1,1,1-Trichlor-2,2-bis-(4-chlorphenyl)-äthan.

Weiterhin sind synergistische Mischungen (von Carbamaten, z.B. 2-iso-Propoxy-phenyl-N-methylcarbamat oder von Phosphorsäureestern, z.B. 0.0-Diäthyl-0-(2-isopropyl-4-methylpyrimidin(6)-yl)-thionophosphorsäureester oder von natürlichen oder synthetischen Pyrethroiden mit Piperonyläthern, wie z.B. $\alpha$-(2-(2-Butoxy-äthoxy)-äthoxy)-4,5-methylendioxy-2-propyl-toluol, bekannt (vergleiche Bull.Org.mond.Santé/Bull.Wld. Hlth Org. 1966, 35, 691—708; Schrader, G.: Die Entwicklung neuer insektizider Phosphorsäureester 1963, S. 158). Doch ist die Wirksamkeit dieser synergistischen Wirkstoffkombinationen nicht befriedigend. Eine gewisse praktische Bedeutung hat bisher nur das $\alpha$-(2-(2-Butoxy-äthoxy)-äthoxy)-4,5-methylendioxy-2-propyl-toluol erlangt.

Bestimmte Benzoxazole und Benzthiazole enthaltende Schädlingsbekämpfungsmittel werden in US—A— 3.641.245, DE—A—2.355.092 und FR—A—840.003 beschrieben. Weiterhin sind bestimmte 2-Propargyläther von Benzoxazolen oder Benzthiazolen aus Chemistry Letters, 1978, No. 4, Tokyo, Japan, Seiten 249—452 sowie aus US—A—2.769.010 bekannt. In diesem Stand der Technik wird jedoch eine Verwendung solcher Verbindungen als Synergisten in insektiziden und akariziden Schädlingsbekämpfungsmitteln weder beschrieben noch nahegelegt.

Es wurde nun gefunden, daß neue Mittel zur Bekämpfung von Insekten und/oder Spinnentieren enthaltend eine Wirkstoffkombination aus substituierten Benzazolen der Formel (I)

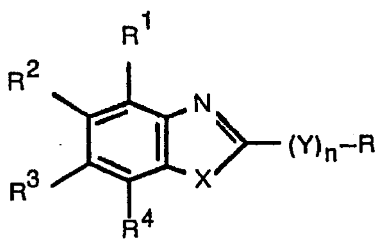

(I)

in welcher

R für Alkyl, Cycloalkyl, Alkenyl oder Alkinyl, jeweils mit be zu 6 Kohlenstoffatomen, für Trifluoromethyl, Cyanomethyl, Benzyl oder Phenyl, welches gegebenenfalls durch $C_{1-4}$ -Alkyl, Halogen, $C_{1-4}$-Alkoxy, Nitro, Cyano, $C_{1-4}$-Alkylthio, $C_{1-4}$-Alkylcarbonyl und/oder $C_{1-4}$-Alkoxycarbonyl substituiert ist, steht

$R^1$, $R^2$, $R^3$ und $R^4$ unabhängig von einander für Wasserstoff, Halogen, gegebenenfalls halogen-substituiertes Alkyl, gegebenenfalls halogen-substituiertes Alkoxy, Nitro, Cyano, Alkylcarbonyl oder Alkoxycarbonyl stehen oder in Kombination zweier Reste einen Benzorest bilden,

X und Y unabhängig von einander für Sauerstoff oder Schwefel stehen und

n für Null oder 1 steht, und einen pestiziden Wirkstoff aus gewählt aus der Gruppe:

A) Carbamate und/oder

B) Carbonsäureester, einschließlich der natürlichen sowie synthetischen Pyrethroide, und/oder

C) Phosphorsäure- und Phosphonsäureester und/oder

D) Halogenalkane

eine besonders hohe pestizide, insbesondere eine außergewöhnlich hohe insektizide und akarizide Wirkung aufweisen.

Die synergistische Wirkung der Verbindungen der allgemeinen Formel (I) zeigt sich besonders bevorzugt bei

A) Carbameten der Allgemeinen Formel II

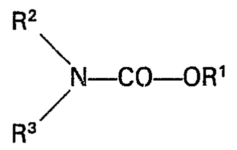 (II)

in welcher
$R^1$ für Aryl, einen Heterocyclus oder einen Oximrest steht, die gegebenenfalls substituiert sind,
$R^2$ für Wasserstoff oder einen Alkylrest mit 1 bis 4 Kohlenstoffatomen steht und
$R^3$ für Alkyl, Alkylcarbonyl mit 1 bis 6 Kohlenstoffatomen im Alkylrest, der gegebenenfalls auch durch Hydroxy oder Methylthio substituiert sein kann, oder den Rest —S—Z steht, wobei
Z für einen gegebenenfalls durch Halogen substituierten aliphatischen Rest mit 1 bis 4 Kohlenstoffatomen, insbesondere $CCl_3$ und $CF_3$ sowie für gegebenenfalls bevorzugt durch Nitril, Halogen, insbesondere Chlor, Methyl, Trihalogenmethyl, Trifluormethylmercapto oder Nitro substituierten Arylrest, insbesondere Phenyl, oder für Methoxycarbonyl oder für den Rest

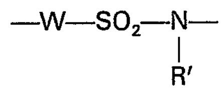

steht, wobei
W für Alkyl Halogenalkyl oder Alkylamino, Dialkylamino oder einen gegebenenfalls bevorzugt durch Halogen, Trihalogenmethyl, Nitril, Methyl oder Nitro substituierten Arylrest steht, und
R′ für Wasserstoff oder Methyl steht.

Besonders bevorzugt sind Carbamate der Formel (II), worin
$R^1$ für Phenyl oder Naphthyl steht, die gegebenenfalls substituiert sind durch Alkyl, Alkenyl, Alkoxy, Alkylthio oder Alkylthioalkyl mit jeweils 1 bis 6 Kohlenstoffatomen, Dialkylamino, Dialkenylamino mit bis zu 3 Kohlenstoffatomen je Alkyl-bzw. Alkenylteil, Halogen, insbesondere Chlor, Dioxolanyl oder den Rest $—N{=}CH—C(C_{1-4}\text{-Alkyl})_2$ steht.

Weiterhin sind besonders bevorzugt Carbamate der Formel (II), worin
$R^1$ für 2,3-Dihydrobenzofuranyl, Benzodioxolyl, Benzothienyl, Pyrimidinyl oder Pyrazolyl steht, die gegebenenfalls durch Alkylgruppen mit 1 bis 4 Kohlenstoffatomen, insbesondere Methyl, oder durch Dialkylaminogruppen mit 1 bis 4 Kohlenstoffatomen je Alkylteil substituiert sind.

Weiterhin sind besonders bevorzugt Carbamate der allgemeinen Formel (II), worin $R^1$ für einen Rest der Formel II a

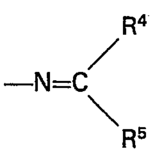 (II a)

steht, in welcher
$R^4$ und $R^5$ gleich oder verschieden sind und für Alkyl, Cycloalkyl, Alkenyl, Alkinyl, Alkoxy, Alkylthio, Alkoxycarbonyl, Alkylcarbamoyl, Alkylthioalkyl, mit jeweils bis zu 6 Kohlenstoffatomen, Cyano, Phenyl, oder gemeinsam für einen gegebenenfalls durch $C_{1-4}$-Alkyl substituierten Dioxolanyl- oder Dithiolanylrest stehen;
besonders erwähnt seien folgende Carbamate der Formel (II):
2-Methylphenyl-, 2-Äthylphenyl-, 2-n-Propylphenyl-, 2-Methoxyphenyl-, 2-Äthoxyphenyl-, 2-iso-Propoxyphenyl-, 4-Methylphenyl-, 4-Äthylphenyl-, 4-n-Propylphenyl-, 4-Methoxyphenyl-, 4-Äthoxyphenyl-, 4-n-Propoxyphenyl-, 3,4,5-Trimethylphenyl-, 1-Naphthyl-, 2,3-Dihydro-2,2-dimethyl-7-benzofuranyl-, 2-(1,3-Dioxolan(2)yl-phenyl)-bzw. 2,2-Dimethyl-1,3-benzodioxol(4)yl-N-methyl-carbamat und die entsprechenden -N-methyl-N-acetyl-, -N-methyl-N-trifluoromethylthio-, -N-methyl-N-dichlormonofluormethylthio- bzw. -N-methyl-N-dimethylaminothiocarbamate.

Weiter zeigt sich die synergistische Wirkung der Verbindungen der allgemeinen Formel (I) bevorzugt bei
B) Carbonsäureestern der allgemeinen Formel III

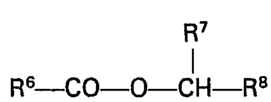 (III)

in welcher
$R^6$ für Alkyl, Aralkyl, Aryl oder Cycloalkyl steht, die gegebenenfalls substituiert sein können,
$R^7$ für Wasserstoff, Alkyl, Halogenalkyl Alkenyl, Alkinyl oder Cyano steht und

$R^8$ für Aryl oder einen Heterocyclus steht, oder gemeinsam mit $R^7$ und der Methingruppe, an die es gebunden ist, einen gegebenenfalls, substituierten Cyclopentenonring bildet.

Besonders bevorzugt sind Carbonsäureester der Formel (III), in welcher $R^6$ für Alkyl mit 1 bis 6 Kohlenstoffatomen, das gegebenenfalls durch gebebenenfalls halogen-substituiertes Phenyl substituiert ist, Cyclopropyl, das gegebenenfalls durch Alkyl, alkenyl, Halogenalkyl oder Halogenalkenyl mit jeweils bis zu 6 Kohlenstoffatomen substituiert ist, oder für Phenyl, das gegebenenfalls durch Halogen substituiert ist, steht, in welcher weiter $R^7$ für Wasserstoff, Alkyl mit 1 bis 6 Kohlenstoffatomen, Halogenalkyl mit 1 bis 4 Kohlenstoffatomen und bis zu 3 Halogenatomen, Cyano oder Äthinyl steht.

Weiter sind besonders bevorzugt Carbonsäureester der Formel (III), in welcher $R^8$ für Phenyl steht, das gegebenenfalls durch $C_{1-4}$-Alkyl, Halogen, insbesondere Fluor oder Chlor, gegebenenfalls halogen- oder methyl-substituiertes Phenoxy, gegebenenfalls substituiertes Benzyl substituiert ist, ferner für Furanyl, Tetrahydrophthalimido, Benzodioxol, die gegebenenfalls durch Halogen, insbesondere Chlor, Alkyl oder Alkenyl mit bis zu 4 Kohlenstoffatomen oder Benzyl substituiert sind, steht, und ferner zusammen mit $R^7$ und der Methingruppe, an die es gebunden ist, für Cyclopentenon steht, das gegebenenfalls durch $C_{1-4}$-Alkyl, Furfuryl, -Alkenyl substituiert ist.

Im einzelnen seien genannt:

Essigsäure-(1-(3,4-dichlorphenyl)-2,2,2-trichloräthyl)-ester 2,3,4,5-Tetrahydrophthalimidomethylchrysanthemat und (5-Benzyl-3-furyl)-methyl-2,2-dimethyl-3-(2-methylpropenyl)-cyclopropan-carboxylat. Weiter sind besonders bevorzugt die natürlich vorkommenden Pyrethroide;

Weiter zeigt sich die synergistische Wirkung der Verbindungen der allgemeinen Formel (I) bevorzugt bei

C) Phosphorsäure- und Phosphonsäureestern der allgemeinen Formel IV

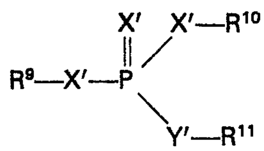

(IV)

in welcher

X' unabhängig von einander für O oder S steht und

Y' für O, S, —NH— oder für eine direkte Bindung zwischen dem zentralen P-Atom und dem $R^{11}$ steht und

$R^9$ und $R^{10}$ gleich oder verschieden sind und für gegebenenfalls substituiertes Alkyl oder Aryl stehen,

$R^{11}$ für gegebenenfalls substituiertes Alkyl, Aryl, Heteroaryl, Aralkyl, Alkenyl, Dioxanyl oder einen Oximrest oder für den gleichen Rest steht, an den es gebunden ist.

Besonders bevorzugt sind Phosphorsäure- und Phosphonsäureester der Formel (IV), in welcher $R^9$ und $R^{10}$ gleich oder verschieden sind und für $C_{1-4}$-Alkyl oder Phenyl stehen,

$R^{11}$ für Alkyl mit 1 bis 4 Kohlenstoffatomen steht, das gegebenenfalls durch Halogen, Hydroxyl, Cyano, gegebenenfalls halogensubstituiertes Phenyl, Carbamoyl, Alkylsulfonyl, Alkylsulfinyl, Alkylcarbonyl, Alkoxy, Alkylmercapto, Alkoxycarbonyl, letztere mit jeweils bis zu 6 Kohlenstoffatomen substituiert ist, für Alkenyl mit bis zu 4 Kohlenstoffatomen, das gegebenenfalls durch Halogen, gegebenenfalls halogensubstituiertes Phenyl oder $C_{1-4}$-Alkoxycarbonyl substituiert ist, oder für den Oximrest der allgemeinen Formel II a

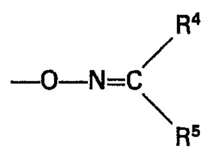

(II a)

wobei $R^4$ und $R^5$ die oben angegebene Bedeutung besitzen, insbesondere jedoch für Cyano oder Phenyl stehen,

$R^{11}$ steht ferner für Dioxanyl, das durch denselben Rest substituiert ist, an den $R^{11}$ gebunden ist, oder $R^{11}$ steht für den gleichen Rest, an den er gebunden ist, oder $R^{11}$ steht für Phenyl, das gegebenenfalls durch Methyl, Nitro, Cyano, Halogen, Methylthio substituiert ist; $R^{11}$ steht außerdem besonders bevorzugt für gegebenenfalls durch $C_{1-4}$-Alkyl und/oder Halogen substituierte Heteroaromaten, wie Pyridin, Chinolin, Chinoxalin, Pyrimidin, Diazinon, Benzo-1,2,4-triazin;

Im einzelnen seien genannt:

O,O-Dimethyl- bzw. O,O-Diäthyl-O-(2,2-dichlor- bzw. 2,2-dibromvinyl)-phosphorsäureester,
O,O-Diäthyl-O-(4-nitro-phenyl)-thionophosphorsäureester,
O,O-Dimethyl-O-(3-methyl-4-methylthio-phenyl)-thionophosphorsäureester,
O,O-Dimethyl-O-(3-methyl-4-nitro-phenyl)-thionophosphorsäureester,
O-Äthyl-S-n-propyl-O-(2,4-dichor-phenyl)-thionophosphorsäureester,

O-Äthyl-S-n-propyl-O-(4-methylthio-phenyl)-thionophosphorsäureester,
O,O-Dimethyl-S-(4-oxo-1,2,3-benzotriazin(3)yl-methyl)-thionothiolphosphorsäureester,
O-Methyl-O-(2-iso-propyl-6-methoxy-pyrimidin(4)yl)-thionomethanphosphonsäureester,
O,O-Diäthyl-O-(2-iso-propyl-6-methyl-pyrimidin(4)yl)-thionophosphorsäureester,
O,O-Diäthyl-O-(3-chlor-4-methyl-cumarin(7)yl)-thionophosphorsäureester,
O,O-Dimethyl-2,2,2-trichlor-1-hydroxy-äthan-phosphonsäureester,
O,O-Dimethyl-S-(methylcarbamoylmethyl)-thionophosphorsäureester.

Weiter zeigt sich die synergistische Wirkung der Verbindungen der allgemeinen Formel (I) bevorzugt bei

D) Halogenalkanen der Formel V

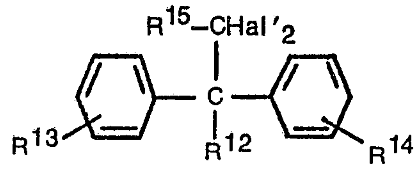

(V)

in welcher

Hal' für Chlor oder Brom und
$R^{12}$ für Wasserstoff der Hydroxyl stehen,
$R^{13}$ und $R^{14}$ gleich oder verschieden sind und für Halogen, Alkyl oder Alkoxy stehen und
$R^{15}$ für Wasserstoff oder Halogen steht, sowie bei Hexachlorcyclohexan.

Besonders bevorzugt sind Halogenalkane der Formel (V),

in welcher

$R^{12}$ und $R^{13}$ Wasserstoff oder Hydroxyl bedeuten, und
$R^{14}$ für Halogen, Alkyl bzw. Alkoxy mit 1 bis 4 Kohlenstoffatomen je Alkyl- bzw. Alkoxyrest steht und
$R^{15}$ Halogen bedeutet, sowie Hexachlorcyclohexan.

Im einzelnen seien genannt:

1,1,1-Trichlor-2,2-bis(4-chlor- bzw. 4-methoxyphenyl)-äthan, 1,1,1-Trichlor-2-hydroxy-2,2-bis-(4-chlor-p-phenyl)-äthan und 1,1-Dichlor-2,2-bis-(4-äthylphenyl)-äthan.

Überraschenderweise ist die insektizide und/oder akarizide Wirkung der erfindungsgemäßen Wirkstoffkombinationen wesentlich höher als die Wirkung der Einzelkomponenten bzw. die Summe der Wirkungen der Einzelkomponenten. Sie ist ferner wesentlich höher als die Wirkung der bereits bekannten Wirkstoffkombination aus 2-iso-Propoxy-phenyl-N-methyl-carbamat und Piperonylbutoxyd. Außerdem zeigen die erfindungsgemäß verwendbaren substituierten Benzazole ausgezeichnete synergistische Wirksamkeit nicht nur bei einer Wirkstoffklasse, sondern bei Wirkstoffen aus den verschiedensten chemischen Stoffgruppen.

Die für die erfindungsgemäßen Wirkstoffkombinationen zu verwendenden Synergisten sind durch Formel (I) definiert. Vorzugsweise stehen darin

R für die bei Formel I angegebenen Reste;
$R^1$, $R^2$, $R^3$ und $R^4$ stehen unabhängig von einander vorzugsweise für Wasserstoff, Halogen, $C_{1-4}$-Alkyl, $C_{1-4}$-Alkoxy, Nitro oder in Kombination zweier Reste für Benzo;
X und Y stehen unabhängig von einander für Sauerstoff oder Schwefel und
n steht für Null oder 1.

Als Beispiele für die erfindungsgemäß als Synergisten zu verwendenden Benzazole der Formel (I) seien genannt: 2-Methyl-, 2-Äthyl-, 2-n-Propyl-, 2-iso-Propyl-, 2-n-Butyl-, 2-iso-Butyl-, 2-sek.-Butyl-, 2-tert.-Butyl-, 2-n-Pentyl-, 2-iso-Pentyl-, 2-sek.-Pentyl-, 2-tert.-Pentyl-, 2-Trifluormethyl-, 2-Methoxy-, 2-Äthoxy-, 2-n-Propoxy-, 2-iso-Propoxy-, 2-n-Butoxy-, 2-iso-Butoxy-, 2-sek.-Butoxy-, 2-tert.-Butoxy-, 2-n-Pentoxy-, 2-iso-Pentoxy-, 2-sek.-Pentoxy-, 2-tert.-Pentoxy-, 2-Methylthio-, 2-Äthylthio-, 2-n-Propylthio-, 2-iso-Propylthio-, 2-n-Butylthio-, 2-iso-Butylthio-, 2-sek.-Butylthio-, 2-tert-Butylthio-, 2-n-Pentylthio-, 2-iso-Pentylthio-, 2-sek.-Pentylthio-, 2-tert.-Pentylthio-, 2-Cyanomethylthio-, 2-Phenylmethylthio-, 2-Propen(2)oxy-, 2-Propen(2)ylthio-, 2-(2-Methyl-propen(2)ylthio-, 2-Propin(2)oxy-, 2-Propin(2)ylthio-, 2-(1-Methyl-propin(2)yl)-thio-, 2-Phenoxy- und 2-(3-Methyl-phenoxy)-benzoxazol und -benzthiazol sowie

2,5-Dimethyl-benzoxazol und -benzthiazol, 5-Methoxy- und 5-Äthoxy-2-methyl-benzthiazol, 5,7-Dichloro-, 5-Chloro-6-nitro- und 5-Chloro-7-nitro-2-methyl-benzoxazol, 5,7-Dichlor-4,5,7-Trichloro-, 4-Chlor-6-nitro-, 5-Chloro-6-nitro- und 5-Chloro-7-nitro-2-methylthio- benzoxazol, 2-Äthylthio-, 2-n-Propylthio-, 2-Propen(2)ylthio- und 2-Propin(2)ylthio-5,7-dichloro-benzoxazol, 2-Methylthio- und 2-Äthylthio-5-chloro-benzthiazol, 2-Methylthio-, 2-Äthylthio-, 2-n-Propylthio-, 2-iso-Propylthio- und 2-Propen(2)ylthio-6-äthoxy-benzthiazol sowie

Naphtho(1,2-d)- und Naphtho(2,1-d)-2-methyl-oxazol und Naphtho(1,2-d)- und Naphtho(2,1-d)-2-methyl-thiazol.

Die Verbindungen der Formel (I) sind bekannt und/oder können nach literaturbekannten Verfahren hergestellt werden (vergleiche z.B. J.Org.Chem.*32* (1967), 2956—2959; DE—OS 2 355 092).

Verbindungen der Formel (I), in welcher Y für Sauerstoff und n für 1 steht, erhält man beispielsweise, indem man Alkohole (Hydroxy-alkane, -alkene, -alkine, -cycloalkane, -arylalkane oder -arene) durch Zugabe von Natrium oder Kalium bei Temperaturen zwischen 0 und 100°C in die entsprechenden Alkoholate umwandelt und diese dann mit 2-Chloroder 2-Brom-benzazolen, welche gemäß der Restedefinition unter Formel (I) substituiert sein können bei Temperaturen zwischen 0 und 150°C umsetzt.

Die Aufarbeitung erfolgt beispielsweise durch Extraktion der Produkte mit Toluol aus der mit Wasser verdünnten Reaktionsmischung, Waschen der organischen Phase mit Wasser, Trocknen und Destillation.

Verbindungen der Formel (I), in welcher Y für Schwefel und n für 1 steht, erhält man beispielsweise, indem man 2-Mercapto-benzazole, welche gemäß der Restedefinition unter Formel (I) substituiert sein können, mit Alalialkoholaten in alkoholischer Lösung, wie z.B. Natriummethylat in Methanol, bei Temperaturen zwischen 0 und 100°C in die entsprechenden Alkalisalze umwandelt und diese mit Halogenverbindungen (Chlor-, Brom- oder Jodalkanen, -alkenen, -alkinen, -cycloalkanen, arylalkanen oder -arenen) bei Temperaturen zwischen 0 und 150°C umsetzt. Die Aufarbeitung kann wie oben beschrieben durch Extraktion, Waschen, Trocknen und Destillation erfolgen.

Wie bereits erwähnt, zeigen die neuen Wirkstoffkombinationen der erfindungsgemäß verwendbaren Benzazole der Formel (I) mit Carbamaten, Carbonsäureestern, Phosphorund Phosphonsäureestern sowie Halogenalkanen eine erhebliche Wirkungssteigerung gegenüber den Einzelwirkstoffen bzw. gegenüber deren Summe.

Einen besonders guten Effekt haben die neuen Verbindungen der Formel Ia

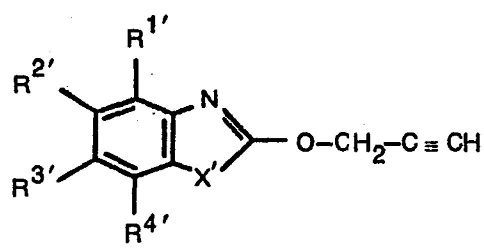

(Ia)

in welcher

$R^{1\prime}$, $R^{2\prime}$, $R^{3\prime}$ und $R^{4\prime}$ unabhängig voneinander für Wasserstoff oder Halogen (insbesondere Chlor) stehen, wobei wenigstens einer dieser Reste für Halogen steht; und

X für Sauerstoff oder Schwefel steht.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotralpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Benisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Helopthis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajules, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilis spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbai spp., Pegomyia hyoscyami, Ceratitus capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder Chlorierte aliphatische Kohlenwasserstoff, wie Chlorbenzole, chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoff für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoff wie anorganische Pigmente, z.B. Eisenoxid, Titanoxid, Ferrocyanblau und organische Farbstoffe, wie Alizarin-, Azol-Mettallphthalocyaninfarbstoffe und Spurennährstoff wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemäßen Wirkstoffe erfolgt in Form ihrer handelsüblichen formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Bevorzugt liegt das Gewichtsverhältnis der Benzazole zu anderen Wirkstoffen zwischen 0,1 zu 10 und 10 zu 0,1.

Beispiel A

$LT_{100}$-Test für Dipteren
Testtiere: Musca domestica (Stamm Weymanns)
Zahl der Testtiere: 25
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten geringeren Konzentrationen verdünnt.

2,5 ml Wirkstofflösung werden in eine Petrischale pipettiert. Auf dem Boden der Petrischale befindet sich ein Filterpapier mit einen Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird laufend kontrolliert. Es wird diejenige Zeit ermittelt, welche für einen 100 %igen knock down-Effekt notwendig ist.

Konzentrationen der Wirkstoffe, synergisten und Gemische und ihre Wirkungen gehen aus der nachfolgenden Tabelle hervor.

TABELLE

$LT_{100}$-Test mit phosphorsaureester-resistenten Musca domestica
(Stamm Weymanns)

| Wirkstoff bzw. Synergisten ( ) Kennbuchstabe ( ) Beispiel-Nr. | Konzentration in % | $LT_{100}$ nach Minuten |
|---|---|---|
| 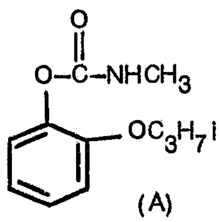 (A) | 1,0 | 360' = 0 % |
| 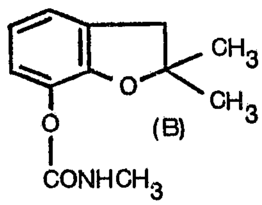 (B) | 1,0 | 360' = 20 % |
| 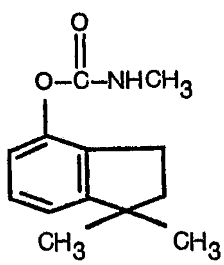 (C) | 1,0 | 360' = 0 % |
| 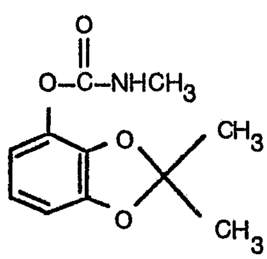 (D) | 1,0 | 360' = 0 % |
| 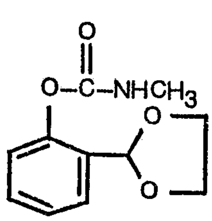 (E) | 1,0 | 360' = 0 % |

TABELLE (Fortsetzung)

| Wirkstoff bzw. Synergisten ( ) Kennbuchstabe ( ) Nr. | Konzentration in % | $LT_{100}$ nach Minuten |
|---|---|---|
| 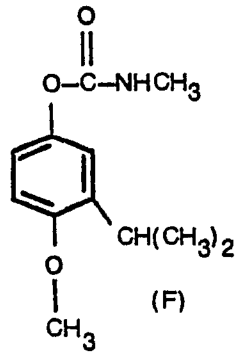 (F) | 1,0 | 360' = 0 % |
| 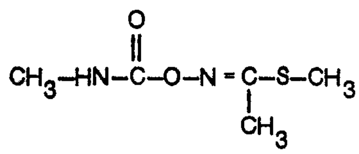 (G) | 0,2 | 360' = 65 % |
| Pyrethrine als 25 %iger Extrakt (H) | 0,04 | 360' = 60 % |
| 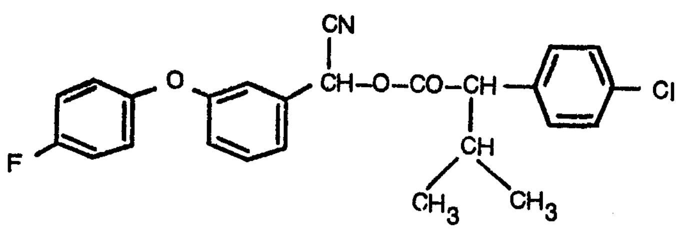 | 0,04 | 240' |
| 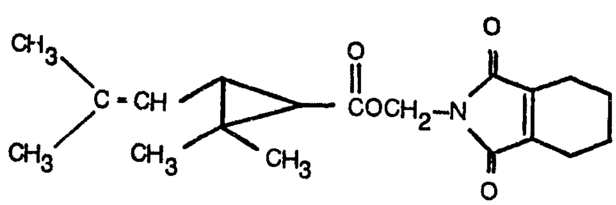 (K) | 0,04 | 360' = 45 % |
| 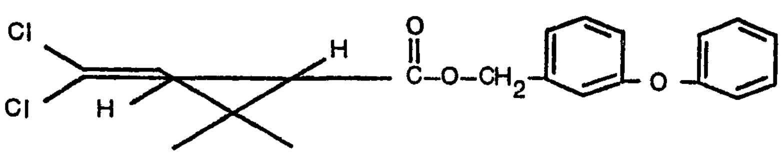 (L) | 0,04 | 105' |

TABELLE (Fortsetzung)

| Wirkstoff bzw. Synergisten ( ) Kennbuchstabe ( ) Nr. | Konzentration in % | $LT_{100}$ nach Minuten |
|---|---|---|
| 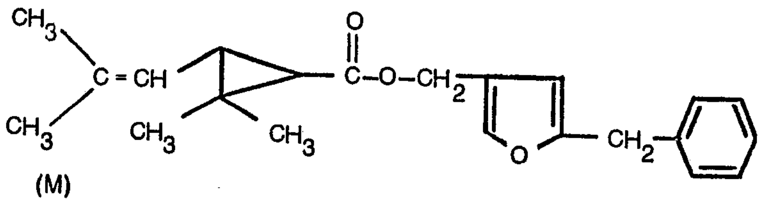 (M) | 0,04 | 210' = |
| 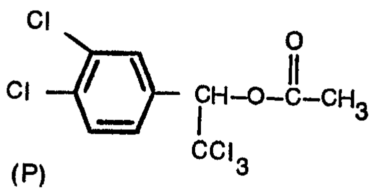 (P) | 1,0 | 360' = 10 % |
| 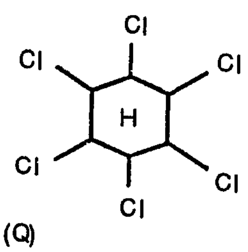 (Q) | 1,0 | 360' |
| 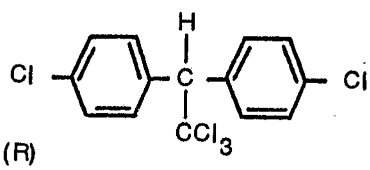 (R) | 1,0 | 360' = 5 % |
| 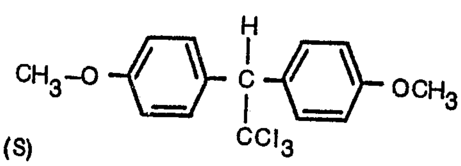 (S) | 1,0 | 360' = 10 % |
| 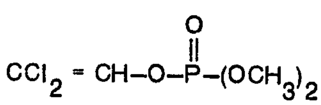 (T) | 0,008 | 360' = 80 % |
| 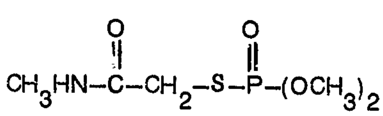 (U) | 0,2 | 360' = 80 % |

TABELLE (Fortsetzung)

| Wirkstoff bzw. Synergisten<br>( ) Kennbuchstabe ( ) Nr. | Konzentration<br>in % | $LT_{100}$ nach<br>Minuten |
|---|---|---|
| 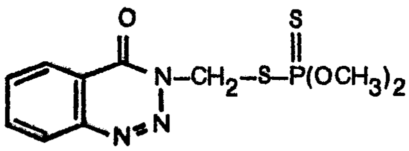<br>(V) | 1,0 | 360' = 0 % |
| 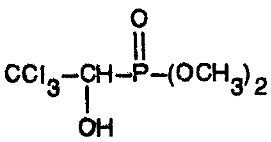<br>(W) | 1,0 | 360' = 0 |
| 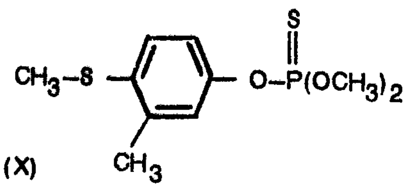<br>(X) | 0,2 | 360' = 10 % |
| 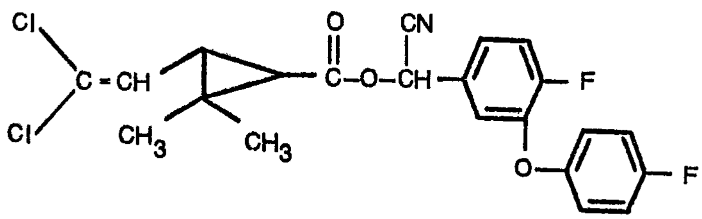<br>(N) | 0,008 | 360' = 95 % |
| 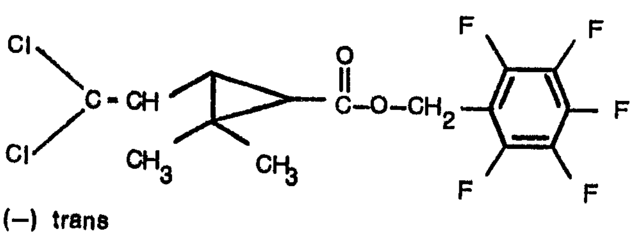<br>(–) trans<br>(O) | 0,0016 | 150' |
| 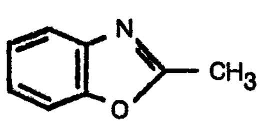<br>(1) | 1,0 | 360' = 0 % |

TABELLE (Fortsetzung)

| Wirkstoff bzw. Synergisten ( ) Kennbuchstabe ( ) Nr. | Konzentration in % | $LT_{100}$ nach Minuten |
|---|---|---|
| 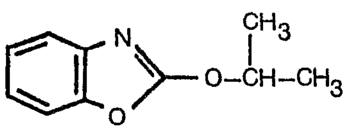 (2) | 1,0 | 360' = 0 % |
| 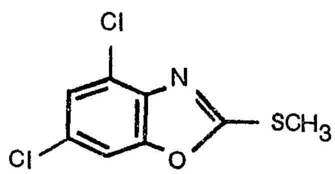 (3) | 1,0 | 360' = 0 % |
| 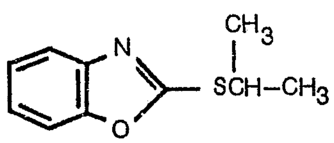 (4) | 1,0 | 360' |
| 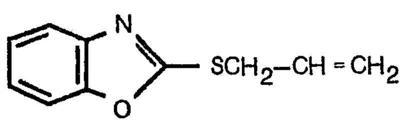 (5) | 0,2 | 360' = 80 % |
| 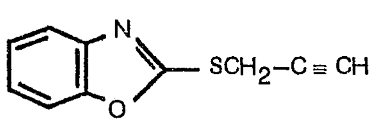 (6) | 0,2 | 360' = 50 % |
| 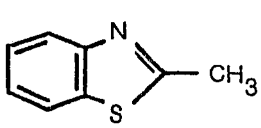 (7) | 0,2 | 360' = 35 % |

TABELLE (Fortsetzung)

| Wirkstoff bzw. Synergisten ( ) Kennbuchstabe ( ) Nr. | Konzentration in % | $LT_{100}$ nach Minuten |
|---|---|---|
| 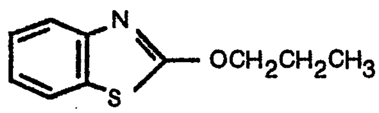 (8) | 1,0 | 360' = 90 % |
| 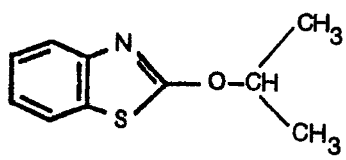 (9) | 1,0 | 360' = 80 % |
| 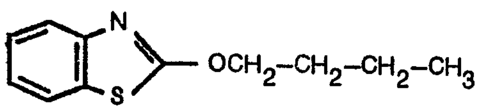 (10) | 0,2 | 360' = 35 % |
| 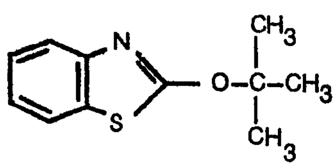 (11) | 1,0 | 360' = 0 % |
| 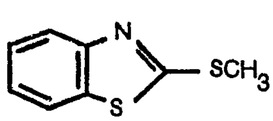 (12) | 0,2 | 240' |
| 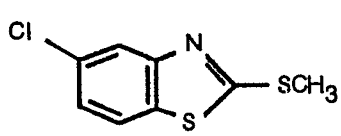 (13) | 1,0 | 360' = 15 % |

TABELLE (Fortsetzung)

| Wirkstoff bzw. Synergisten ( ) Kennbuchstabe ( ) Nr. | Konzentration in % | $LT_{100}$ nach Minuten |
|---|---|---|
| 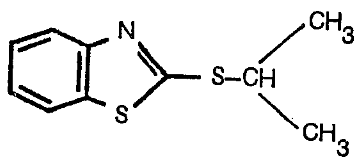 (14) | 0,2 | 360' = 5 % |
| 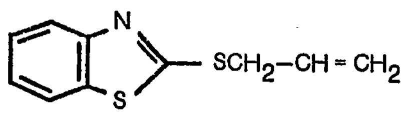 (15) | 1,0 | 360' = 80 % |
| 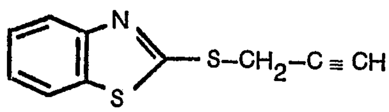 (16) | 1,0 | 360' = 0 % |
| 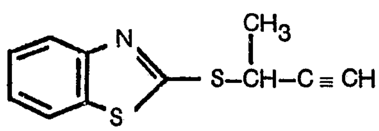 (17) | 1,0 | 360' = 60 % |
| Vergleichsmittel: Piperonylbutoxid | 1,0 | 360' = 0 % |

| Kennbuchstabe des Wirkstoffes | + | Synergist Nr. | Konzentrationen in % Wirkstoff | + | Synergist | LT 100 nach Minuten |
|---|---|---|---|---|---|---|
| A | + | Piperonylbutoxid (Vergleichsmittel) | 0,2 | + | 0,2 | 360′ = 60 % |
| A | + | 1 | 0,2 | + | 0,2 | 360′ = 90 % |
| A | + | 6 | 0,04 | + | 0,04 | 180′ |
| A | + | 7 | 0,2 | + | 0,2 | 240′ |
| A | + | 8 | 0,2 | + | 0,2 | 210′ |
| A | + | 10 | 0,2 | + | 0,2 | 360′ |
| A | + | 14 | 0,2 | + | 0,2 | 240′ |
| B | + | Piperonylbutoxid (Vergleichsmittel) | 1,0 | + | 1,0 | 210′ |
| B | + | 1 | 0,2 | + | 0.2 | 150′ |
| B | + | 2 | 1,0 | + | 1,0 | 60′ |
| B | + | 4 | 0,2 | + | 0,2 | 150′ |
| B | + | 6 | 0,04 | + | 0,04 | 120′ |
| B | + | 7 | 0,04 | + | 0,04 | 180′ |
| B | + | 8 | 0,2 | + | 0,2 | 75′ |
| B | + | 9 | 0,2 | + | 0,2 | 90′ |
| B | + | 10 | 0,2 | + | 0,2 | 150′ |
| B | + | 11 | 0,2 | + | 0,2 | 105′ |
| B | + | 12 | 0,2 | + | 0,2 | 105′ |
| B | + | 14 | 0,04 | + | 0,04 | 210′ |
| B | + | 15 | 0,2 | + | 0,2 | 180′ |
| B | + | 16 | 0,2 | + | 0,2 | 210′ |
| B | + | 17 | 0,04 | + | 0,04 | 180′ |

| Kennbuchstabe des Wirkstoffes | + | Synergist Nr. | Konzentrationen in % Wirkstoff | + | Synergist | LT 100 nach Minuten |
|---|---|---|---|---|---|---|
| C | + | Piperonylbutoxid (Vergleichsmittel) | 1,0 | + | 1,0 | 360′ = 80 % |
| C | + | 1 | 1,0 | + | 1,0 | 45′ |
| C | + | 7 | 0,2 | + | 0,2 | 60′ |
| D | + | Piperonylbutoxid (Vergleichsmittel) | 1,0 | + | 1,0 | 360′ = 20 % |
| D | + | 1 | 1,0 | + | 1,0 | 360′ |
| D | + | 2 | 1,0 | + | 1,0 | 180′ |
| D | + | 4 | 1,0 | + | 1,0 | 180′ |
| D | + | 5 | 0,2 | + | 0,2 | 150′ |
| D | + | 6 | 0,04 | + | 0,04 | 240′ |
| D | + | 7 | 1,0 | + | 1,0 | 60′ |
| D | + | 8 | 1,0 | + | 1,0 | 180′ |
| D | + | 9 | 1,0 | + | 1,0 | 120′ |
| D | + | 11 | 1,0 | + | 1,0 | 360′ |
| D | + | 12 | 1,0 | + | 1,0 | 120′ |
| D | + | 14 | 0,2 | + | 0,2 | 360′ |
| D | + | 15 | 1,0 | + | 1,0 | 210′ |
| D | + | 17 | 1,0 | + | 1,0 | 210′ |
| E | + | Piperonylbutoxid (Vergleichsmittel) | 1,0 | + | 1,0 | 360′ = 15 % |
| E | + | 1 | 0,2 | + | 0,2 | 150′ |
| E | + | 2 | 0,2 | + | 0,2 | 360′ = 95 % |
| E | + | 7 | 0,2 | + | 0,2 | 75′ |
| E | + | 8 | 1,0 | + | 1,0 | 120′ |
| E | + | 9 | 0,2 | + | 0,2 | 60′ |
| E | + | 10 | 0,2 | + | 0,2 | 105′ |
| E | + | 11 | 0,2 | + | 0,2 | 240′ |
| E | + | 12 | 0,2 | + | 0,2 | 105′ |
| E | + | 14 | 0,2 | + | 0,2 | 180′ |
| E | + | 15 | 1,0 | + | 1,0 | 180′ |
| E | + | 16 | 1,0 | + | 1,0 | 210′ |

| Kennbuchstabe des Wirkstoffes | + | Synergist Nr. | Konzentrationen in % Wirkstoff | + | Synergist | LT 100 nach Minuten |
|---|---|---|---|---|---|---|
| F | + | Piperonylbutoxid (Vergleichsbeispiel) | 1,0 | + | 1,0 | 360′ = 90 % |
| F | + | 9 | 1,0 | + | 1,0 | 180′ |
| F | + | 12 | 0,2 | + | 0,2 | 180′ |
| F | + | 14 | 0,2 | + | 0,2 | 180′ |
| G | + | Piperonylbutoxid (Vergleichsbeispiel) | 0,2 | + | 0,2 | 360′ = 95 % |
| G | + | 2 | 0,2 | + | 0,2 | 90′ |
| G | + | 4 | 0,2 | + | 0,2 | 90′ |
| G | + | 5 | 0,2 | + | 0,2 | 120′ |
| G | + | 6 | 0,2 | + | 0,2 | 60′ |
| G | + | 8 | 0,2 | + | 0,2 | 75′ |
| G | + | 9 | 0,2 | + | 0,2 | 75′ |
| G | + | 10 | 0,2 | + | 0,2 | 120′ |
| G | + | 11 | 0,2 | + | 0,2 | 150′ |
| G | + | 12 | 0,2 | + | 0,2 | 105′ |
| G | + | 14 | 0,2 | + | 0,2 | 75′ |
| G | + | 15 | 0,2 | + | 0,2 | 105′ |
| G | + | 16 | 0,2 | + | 0,2 | 120′ |
| G | + | 17 | 0,2 | + | 0,2 | 150′ |
| H | + | Piperonylbutoxid (Vergleichsmittel) | 0,04 | + | 0,04 | 150′ |
| H | + | 2 | 0,04 | + | 0,04 | 120′ |
| H | + | 4 | 0,04 | + | 0,04 | 105′ |
| H | + | 5 | 0,04 | + | 0,04 | 75′ |
| H | + | 6 | 0,04 | + | 0,04 | 60′ |
| H | + | 10 | 0,04 | + | 0,04 | 90′ |
| H | + | 12 | 0,04 | + | 0,04 | 75′ |
| H | + | 13 | 0,04 | + | 0,04 | 120′ |
| H | + | 15 | 0,04 | + | 0,04 | 60′ |
| H | + | 16 | 0,04 | + | 0,04 | 120′ |
| H | + | 17 | 0,04 | + | 0,04 | 90′ |

| Kennbuchstabe des Wirkstoffes | + | Synergist Nr. | Konzentrationen in % Wirkstoff | + | Synergist | LT 100 nach Minuten |
|---|---|---|---|---|---|---|
| I | + | Piperonylbutoxid (Vergleichsmittel) | 0,04 | + | 0,04 | 150' |
| I | + | 4 | 0,04 | + | 0,04 | 90' |
| I | + | 5 | 0,04 | + | 0,04 | 75' |
| I | + | 6 | 0,04 | + | 0,04 | 75' |
| I | + | 7 | 0,04 | + | 0,04 | 75' |
| I | + | 8 | 0,04 | + | 0,04 | 75' |
| I | + | 9 | 0,04 | + | 0,04 | 105' |
| I | + | 10 | 0,04 | + | 0,04 | 60' |
| I | + | 12 | 0,04 | + | 0,04 | 90' |
| I | + | 13 | 0,04 | + | 0,04 | 105' |
| I | + | 14 | 0,04 | + | 0,04 | 90' |
| I | + | 15 | 0,04 | + | 0,04 | 90' |
| I | + | 16 | 0,04 | + | 0,04 | 90' |
| I | + | 17 | 0,04 | + | 0,04 | 75' |
| K | + | Piperonylbutoxid | 0,04 | + | 0,04 | $6^h$ |
| K | + | 2 | 0,04 | + | 0,04 | 150' |
| K | + | 3 | 0,04 | + | 0,04 | 120' |
| K | + | 4 | 0,04 | + | 0,04 | 75' |
| K | + | 5 | 0,04 | + | 0,04 | 90' |
| K | + | 6 | 0,04 | + | 0,04 | 60' |
| K | + | 8 | 0,04 | + | 0,04 | 120' |
| K | + | 10 | 0,04 | + | 0,04 | 60' |
| K | + | 12 | 0,04 | + | 0,04 | 60' |
| K | + | 13 | 0,04 | + | 0,04 | 105' |
| K | + | 14 | 0,04 | + | 0,04 | 75' |
| K | + | 15 | 0,04 | + | 0,04 | 60' |
| K | + | 16 | 0,04 | + | 0,04 | 60' |
| K | + | 17 | 0,04 | + | 0,04 | 105' |

| Kennbuchstabe des Wirkstoffes | + | Synergist Nr. | Konzentrationen in % Wirkstoff | + | Synergist | LT 100 nach Minuten |
|---|---|---|---|---|---|---|
| L | + | Piperonylbutoxid | 0,04 | + | 0,04 | 210′ |
| L | + | 4 | 0,04 | + | 0,04 | 45′ |
| L | + | 5 | 0,04 | + | 0,04 | 60′ |
| L | + | 6 | 0,04 | + | 0,04 | 45′ |
| L | + | 8 | 0,04 | + | 0,04 | 75′ |
| L | + | 10 | 0,04 | + | 0,04 | 45′ |
| L | + | 11 | 0,04 | + | 0,04 | 60′ |
| L | + | 13 | 0,04 | + | 0,04 | 45′ |
| L | + | 15 | 0,04 | + | 0,04 | 45′ |
| L | + | 16 | 0,04 | + | 0,04 | 45′ |
| L | + | 17 | 0,04 | + | 0,04 | 75′ |
| M | + | Piperonylbutoxid | 0,04 | + | 0,04 | 90′ |
| M | + | 1 | 0,04 | + | 0,04 | 60′ |
| M | + | 3 | 0,04 | + | 0,04 | 60′ |
| M | + | 4 | 0,04 | + | 0,04 | 45′ |
| M | + | 6 | 0,04 | + | 0,04 | 45′ |
| M | + | 7 | 0,04 | + | 0,04 | 60′ |
| M | + | 8 | 0,04 | + | 0,04 | 45′ |
| M | + | 9 | 0,04 | + | 0,04 | 60′ |
| M | + | 10 | 0,04 | + | 0,04 | 45′ |
| M | + | 11 | 0,04 | + | 0,04 | 60′ |
| M | + | 12 | 0,04 | + | 0,04 | 75′ |
| M | + | 14 | 0,04 | + | 0,04 | 45′ |
| M | + | 15 | 0,04 | + | 0,04 | 30′ |
| M | + | 16 | 0,04 | + | 0,04 | 30′ |
| M | + | 17 | 0,04 | + | 0,04 | 45′ |
| N | + | Piperonylbutoxid | 0,008 | + | 0,008 | 120′ |
| N | + | 2 | 0,008 | + | 0,008 | 90′ |
| N | + | 4 | 0,008 | + | 0,008 | 105′ |
| N | + | 6 | 0,008 | + | 0,008 | 90′ |

| Kennbuchstabe des Wirkstoffes | + | Synergist Nr. | Konzentrationen un % Wirkstoff | + | Synergist | LT 100 nach Minuten |
|---|---|---|---|---|---|---|
| O | + | Piperonylbutoxid | 0,0016 | + | 0,0016 | 180′ |
| O | + | 3 | 0,0016 | + | 0,0016 | 90′ |
| O | + | 5 | 0,0016 | + | 0,0016 | 60′ |
| O | + | 6 | 0,0016 | + | 0,0016 | 90′ |
| O | + | 8 | 0,0016 | + | 0,0016 | 105′ |
| O | + | 10 | 0,0016 | + | 0,0016 | 120′ |
| O | + | 13 | 0,0016 | + | 0,0016 | 60′ |
| O | + | 15 | 0,0016 | + | 0,0016 | 120′ |
| P | + | Piperonylbutoxid | 1,0 | + | 1,0 | 360′ = 50 % |
| P | + | 1 | 1,0 | + | 1,0 | 45′ |
| P | + | 7 | 0,2 | + | 0,2 | 360′ = 95 % |
| P | + | 9 | 0,2 | + | 0,2 | 360′ = 95 % |
| P | + | 10 | 0,2 | + | 0,2 | 360′ |
| P | + | 11 | 0,2 | + | 0,2 | 360′ |
| P | + | 12 | 0,04 | + | 0,04 | 360′ |
| P | + | 14 | 0,2 | + | 0,2 | 360′ = 95 % |
| Q | + | Piperonylbutoxid | 1,0 | + | 1,0 | $6^h$ |
| Q | + | 1 | 1,0 | + | 1,0 | 75′ |
| Q | + | 4 | 0,2 | + | 0,2 | 90′ |
| Q | + | 7 | 0,2 | + | 0,2 | 210′ |
| Q | + | 8 | 0,2 | + | 0,2 | 150′ |
| Q | + | 9 | 0,04 | + | 0,04 | 210′ |
| Q | + | 10 | 0,2 | + | 0,2 | 120′ |
| Q | + | 11 | 0,2 | + | 0,2 | 180′ |
| Q | + | 13 | 0,2 | + | 0,2 | 150′ |
| Q | + | 14 | 0,04 | + | 0,04 | 210′ |

| Kennbuchstabe des Wirkstoffes | + | Synergist Nr. | Konzentrationen in % Wirkstoff | + | Synergist | LT 100 nach Minuten |
|---|---|---|---|---|---|---|
| R | + | Piperonylbutoxid | 1,0 | + | 1,0 | 360' = 20 % |
| R | + | 1 | 1,0 | + | 1,0 | 360' = 85 % |
| R | + | 7 | 1,0 | + | 1,0 | 45' |
| R | + | 9 | 1,0 | + | 1,0 | 120' |
| R | + | 10 | 1,0 | + | 1,0 | 90' |
| R | + | 12 | 1,0 | + | 1,0 | 60' |
| R | + | 13 | 0,2 | + | 0,2 | 360' |
| R | + | 14 | 0,2 | + | 0,2 | 360' |
| S | + | Piperonylbutoxid | 1,0 | + | 1,0 | 360' = 85 % |
| S | + | 1 | 1,0 | + | 1,0 | 105' |
| S | + | 4 | 1,0 | + | 1,0 | 105' |
| S | + | 5 | 1,0 | + | 1,0 | 75' |
| S | + | 6 | 1,0 | + | 1,0 | 105' |
| S | + | 7 | 1,0 | + | 1,0 | 30' |
| S | + | 8 | 1,0 | + | 1,0 | 180' |
| S | + | 9 | 0,2 | + | 0,2 | 150' |
| S | + | 10 | 1,0 | + | 1,0 | 60' |
| S | + | 11 | 1,0 | + | 1,0 | 90' |
| S | + | 12 | 0,2 | + | 0,2 | 105' |
| S | + | 14 | 1,0 | + | 1,0 | 105' |
| S | + | 17 | 1,0 | + | 1,0 | 180' |
| T | + | Piperonylbutoxid | 0,008 | + | 0,008 | 360' |
| T | + | 10 | 0,008 | + | 0,008 | 210' |
| T | + | 11 | 0,008 | + | 0,008 | 120' |

| Kennbuchstabe des Wirkstoffes | + | Synergist Nr. | Konzentrationen in % Wirkstoff | + | Synergist | LT 100 nach Minuten |
|---|---|---|---|---|---|---|
| U | + | Piperonylbutoxid | 0,2 | + | 0,2 | 210' |
| U | + | 4 | 0,2 | + | 0,2 | 90' |
| U | + | 6 | 0,2 | + | 0,2 | 75' |
| U | + | 8 | 0,2 | + | 0,2 | 75' |
| U | + | 9 | 0,2 | + | 0,2 | 60' |
| U | + | 10 | 0,2 | + | 0,2 | 60' |
| U | + | 12 | 0,2 | + | 0,2 | 60' |
| U | + | 14 | 0,2 | + | 0,2 | 60' |
| U | + | 15 | 0,2 | + | 0,2 | 120' |
| U | + | 16 | 0,2 | + | 0,2 | 120' |
| U | + | 17 | 0,2 | + | 0,2 | 105' |
| V | + | Piperonylbutoxid | 1,0 | + | 1,0 | 360' |
| V | + | 4 | 1,0 | + | 1,0 | 75' |
| V | + | 5 | 1,0 | + | 1,0 | 75' |
| V | + | 8 | 1,0 | + | 1,0 | 120' |
| V | + | 9 | 1,0 | + | 1,0 | 75' |
| V | + | 11 | 1,0 | + | 1,0 | 105' |
| V | + | 12 | 1,0 | + | 1,0 | 75' |
| V | + | 14 | 1,0 | + | 1,0 | 60' |
| W | + | Piperonylbutoxid | 1,0 | + | 1,0 | 360' = 90 % |
| W | + | 6 | 1,0 | + | 1,0 | 150' |
| W | + | 7 | 1,0 | + | 1,0 | 150' |
| W | + | 9 | 0,2 | + | 0,2 | 120' |
| W | + | 11 | 1,0 | + | 1,0 | 90' |
| W | + | 14 | 0,2 | + | 0,2 | 150' |

| Kennbuchstabe des Wirkstoffes | + | Synergist Nr. | Konzentrationen in % Wirkstoff | + | Synergist | LT 100 nach Minuten |
|---|---|---|---|---|---|---|
| X | + | Piperonylbutoxid | 0,2 | + | 0,2 | 360' - 20 % |
| X | + | 1 | 0,2 | + | 0,2 | 150' |
| X | + | 7 | 0,2 | + | 0,2 | 360' |
| X | + | 8 | 0,2 | + | 0,2 | 210' |
| X | + | 9 | 0,2 | + | 0,2 | 360' |
| X | + | 10 | 0,2 | + | 0,2 | 180' |
| X | + | 11 | 0,2 | + | 0,2 | 360' |
| X | + | 14 | 0,2 | + | 0,2 | 240' |
| X | + | 15 | 0,2 | + | 0,2 | 240' |
| X | + | 17 | 0,2 | + | 0,2 | 360' |

## Herstellungsbeispiele

A) *2-Alkoxy-benzazole*

Man löst 0,2 Mol Natrium im zu verwendenden Alkohol (ca. 200 ml), gibt 0,2 Mol 2-Chlorbenzazol dazu und rührt das Reaktionsgemisch bei ca. 100°C Badtemperatur. Nach Abkühlen wird in Toluol/Wasser aufgenommen, die organische Phase abgetrennt, mit Wasser gewaschen, getrocknet und nach Filtration destilliert.

B) *2-Alkylthio-benzazole*

Man löst 0,2 Mol Natrium in 200 ml Methanol, gibt dazu 0,2 Mol 2-Mercapto-benzazol und anschließend 0,2 Mol Halogenalkan und rührt das Gemisch 2 Stunden, wobei man es unter Rückfluß zum Sieden erhitzt. Nach Abkünlen wird in Toluol/Wasser augenommen, die organische Phase abgetrennt, mit Wasser gewaschen, getrocknet, filtriert und destilliert.

Nach Herstellungsmethode (A) oder (B) können die in der folgenden Tabelle aufgeführten Verbindungen der Formel (I) synthetisiert werden (n steht für 1).

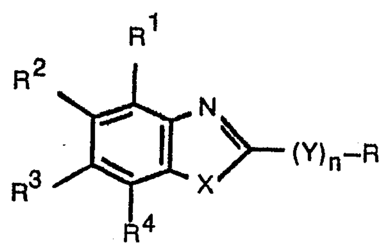

(I)

| Beispiel Nr. | $R^1$ | $R^2$ | $R^3$ | $R^4$ | X | Y | R | Siedepunkt (°C) mBar |
|---|---|---|---|---|---|---|---|---|
| 1 | H | H | H | H | S | O | $CH_3$ | 80/1,5 |
| 2 | H | H | H | H | S | O | $C_2H_5$ | 95/3 |
| 3 | H | H | H | H | S | O | $CH(CH_3)_2$ | 106/3 |
| 4 | H | H | H | H | S | O | $C(CH_3)_3$ | 92/3 |
| 5 | H | H | H | H | S | O | $C_3H_7$-n | 104/4 |
| 6 | H | H | H | H | S | O | $C_4H_9$-n | 119/3 |
| 7 | H | H | H | H | S | O | $CH(CH_3)-CH_2-CH_3$ | $n_D^{21}$ = 1,5312 |
| 8 | H | H | H | H | S | O | $CH_2-CH(CH_3)_2$ | $n_D^{21}$ = 1,5172 |
| 9 | H | H | H | H | S | O | $CH_2CH_2CH(CH_3)_2$ | $n_D^{21}$ = 1,5098 |
| 10 | H | H | H | H | S | O | $C_5H_{11}$-n | $n_D^{21}$ = 1,5102 |
| 11 | H | H | H | H | O | O | $CH(CH_3)_2$ | 74/2 |
| 12 | H | H | H | H | S | S | $CH_3$ | 104/3 |
| 13 | H | H | H | H | S | S | $C_2H_5$ | 116/3 |
| 14 | H | H | H | H | S | S | $CH(CH_3)_2$ | 115/1,5 |
| 15 | H | H | H | H | S | S | $C_3H_7$-n | 120/4 |
| 16 | H | H | H | H | S | S | $CH_2CH(CH_3)_2$ | 132/3 |
| 17 | H | H | H | H | S | S | $C_4H_9$-n | 130/1,5 |
| 18 | H | H | H | H | S | S | $CH(CH_3)-CH_2CH_3$ | 132/3 |
| 19 | H | H | H | H | S | S | $CH_2CH_2CH(CH_3)_2$ | 150/1,5 |
| 20 | H | H | H | H | S | S | $C_5H_{11}$-n | 154/1,5 |
| 21 | H | H | H | H | S | S | $CH_2C_6H_5$ | 210/4 |
| 22 | H | H | H | H | S | S | $C_6H_{11}$ | 172/3 |
| 23 | H | Cl | H | H | S | S | $CH_3$ | Fp. 85 |
| 24 | H | Cl | H | H | S | S | $C_2H_5$ | Fp. 154 |
| 25 | H | H | $OC_2H_5$ | H | S | S | $CH_3$ | Fp. 46 |
| 26 | H | H | $OC_2H_5$ | H | S | S | $C_2H_5$ | Fp. 54 |
| 27 | H | H | $OC_2H_5$ | H | S | S | $CH(CH_3)_2$ | $n_D^{21}$ = 1,5063 |
| 28 | H | H | $OC_2H_5$ | H | S | S | $C_3H_7$-n | $n_D^{21}$ = 1,5164 |

| Beispiel Nr. | $R^1$ | $R^2$ | $R^3$ | $R^4$ | X | Y | R | Siedepunkt (°C) mBar |
|---|---|---|---|---|---|---|---|---|
| 29 | H | H | H | H | S | S | $C(CH_3)_3$ | $n_D^{21}$ = 1,5326 |
| 30 | H | Cl | H | Cl | O | S | $CH_3$ | Fp. 87 |
| 31 | Cl | Cl | H | Cl | O | S | $CH_3$ | Fp. 104 |
| 32 | H | Cl | H | $NO_2$ | O | S | $CH_3$ | Fp. 103 |
| 33 | H | Cl | $NO_2$ | H | O | S | $CH_3$ | Fp. 98 |
| 34 | H | $NO_2$ | H | Cl | O | S | $CH_3$ | Fp. 116–118 |
| 35 | H | H | H | H | O | S | $CH(CH_3)_2$ | 102/3 |
| 36 | H | H | H | H | O | S | $CH_3$ | $n_D^{21}$ = 1,6120 |
| 37 | H | H | H | H | O | S | $C_2H_5$ | 96/3 |
| 38 | H | Cl | H | Cl | O | S | $C_2H_5$ | Fp. 70 |
| 39 | H | Cl | H | Cl | O | S | $C_3H_7$-n | $n_D^{21}$ = 1,5912 |
| 40 | H | H | H | H | S | O | $CH_2-C\equiv CH$ | Fp. 53 |
| 41 | H | H | H | H | O | O | $CH_2-C\equiv CH$ | Fp. 132/10 |
| 42 | H | Cl | H | H | O | O | $CH_2-C\equiv CH$ | Fp. 72 |
| 43 | H | H | $NO_2$ | H | S | O | $CH_2-C\equiv CH$ | $n_D^{21}$ = 1,4798 |
| 44 | Cl | H | Cl | H | O | O | $CH_2-C\equiv CH$ | Fp. ~ 91 |

## Patentansprüche

1. Mittel zur Bekämpfung von Insekten und Spinnentieren, gekennzeichnet durch einen Gehalt an einer Wirkstoffkombination bestehend aus substituierten Benzazolen der Formel I

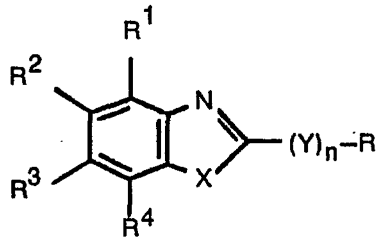

(I)

in welcher
R für Alkyl, Cycloalkyl, Alkenyl oder Alkinyl, jeweils mit be zu 6 Kohlenstoffatomen, für Trifluoromethyl, Cyanomethyl, Benzyl oder Phenyl, welches gegebenenfalls durch $C_{1-4}$ -Alkyl, Halogen, $C_{1-4}$-Alkoxy, Nitro, Cyano, $C_{1-4}$-Alkylthio, $C_{1-4}$-Alkylcrbonyl und/oder $C_{1-4}$-Alkoxycarbonyl substituiert ist steht,
$R^1$, $R^2$, $R^3$ und $R^4$ unabhängig von einander für Wasserstoff, Halogen, gegebenenfalls halogen-substituiertes Alkyl, gegebenenfalls halogen-substituiertes Alkoxy, Nitro, Cyano, Alkylcarbonyl, oder Alkoxycarbonyl stehen oder in Kombination zweier Reste einen Benzorest bilden,
X und Y unabhängig von einander für Sauerstoff oder Schwefel stehen und
n für Null oder 1 steht, und einen pestiziden Wirkstoff ausgewahlt aus der Gruppe:
A) Carbamaten und/oder
B) Carbonsäureestern, einschließlich der natürlichen sowie synthetischen Pyrethroide, und/oder

C) Phosphorsäure- und Phosphonsäureestern und/oder

D) Halogenalkanen

2. Mittel gemäß Anspruch 1, dadurch gekennzeichnet, daß in der Wirkstoffkombination das Gewichtsverhältnis von Benzazolen zu den anderen Wirkstoffen zwischen 0,1 zu 10 und 10 zu 0,1 liegt.

3. Verfahren zur Bekämpfung von Insekten und Spinnentieren, dadurch gekennzeichnet, daß man eine Wirkstoffkombination gemäß Anspruch 1 auf Insekten und Spinnentiere und/oder ihren gebensraum einwirken läßt.

4. Verwendung von Mitteln gemäß Anspruch 1 zur Bekämpfung von Schädlingen insbesondere von Insekten und Spinnentieren.

5. Verfahren zur Herstellung von insektiziden und akariziden Mitteln, dadurch gekennzeichnet, daß man eine Mittel gemäß Anspruch 1 mit Streckmitteln und/oder oberflächenaktiven Mitteln vermischt.

6. Benzazole der Formel Ia

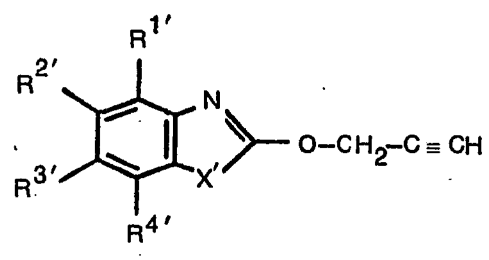

(Ia)

in welcher

$R^{1'}$, $R^{2'}$, $R^{3'}$ und $R^{4'}$ unabhängig voneinander für Wasserstoff oder Halogen, vorzugsweise Chlor, stehen, wobei wenigstens einer dieser Reste für Halogen steht; und

X' für Sauerstoff oder Schwefel steht.

**Revendications**

1. Composition destinée à la lutte contre des insectes et des acariens, caractérisée par une teneur en une association de substances actives formée de benzazoles substitués de formule I

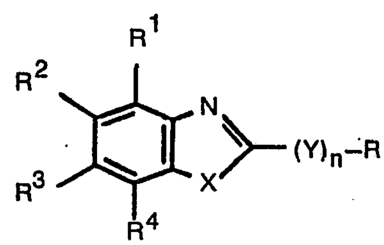

(I)

dans laquelle

R est un groupe alkyle, cycloalkyle, alcényle ou alcynyle, chacun ayant jusqu'à 6 atomes de carbone, un groupe trifluorométhyle, cyanométhyle, benzyle ou un groupe phényle qui est éventuellement substitué par un radical alkyle en $C_1$ à $C_4$, un halogène, un radical alkoxy en $C_1$ à $C_4$, nitro, cyano, alkylthio en $C_1$ à $C_4$, (alkyle en $C_1$ à $C_4$)-carbonyle et/ou (alkoxy en $C_1$ à $C_4$)-carbonyle,

$R^1$, $R^2$ $R^3$ et $R^4$ représentent, indépendamment l'un de l'autre, l'hydrogène, un halogène, un groupe alkyle éventuellement substitué par un halogéne, un groupe alkoxy éventuellement substitué par un halogéne, nitro, cyano, alkylcarbonyle ou alkoxycarbonyle ou forment un reste benzo par association de deux restes,

X et Y représentent, indépendamment l'un de l'autre, l'oxygène ou le soufre et

*n* est égal à 0 ou a 1, et d'une substance douée d'activité pesticide choisie dans le groupe comprenant:

A) des carbamates et/ou

B) des esters d'acides carboxyliques, y compris les pyréthrines naturelles de même que synthétiques, et/ou

C) des esters d'acide phosphorique et d'acide phosphonique et/ou

D) des halogénalcanes.

2. Composition suivant la revendication 1, caractérisée en ce que dans l'association de substances actives, le rapport en poids des benzazoles aux autres substances actives a une valeur de 0,1:10 à 10:0,1.

3. Procédé de lutte contre des insectes et des acariens, caractérisé en cen qu'on fait agir une association de substances actives suivant la revendication 1 sur les insectes et les acariens et/ou sur leur habitat.

4. Utilisation de compositions suitant la revendication 1 pour la lutte contre des parasites, notamment des insectes et des acariens.

5. Procédé de production de compositions insecticides et acaricides, caractérisé en ce qu'on mélange une composition suivant la revendication 1 avec des diluants et/ou des agents tensio-actifs.

6. Des benzazoles de formule Ia

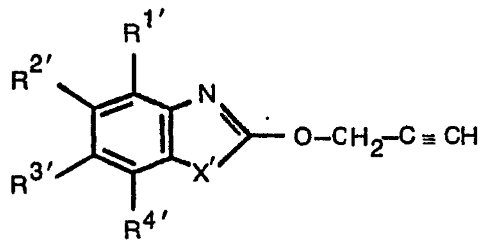

(Ia)

dans laquelle
$R^{1'}$, $R^{2'}$, $R^{3'}$ et $R^{4'}$ représentent, indépendamment l'un de l'autre, l'hydrogène ou un halogène, de préférence le chlore, l'un au moins de ces restes représentant un halogène; et
X' est l'oxygène ou le soufre.

**Claims**

1. Agents for combating insects and arachnidae, characterised in that they contain an active compound combination consisting of substituted benzazoles of the formula I

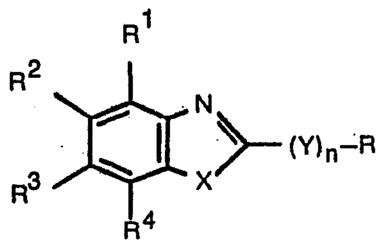

(I)

in which
r represents alkyl, cycloalkyl, alkenyl or alkinyl, in each case with up to 6 carbon atoms, trifluoromethyl, cyanomethyl, benzyl or phenyl which is optionally substituted by $C_{1-4}$-alkyl, halogen, $C_{1-4}$-alkoxy, nitro, cyano, $C_{1-4}$-alkylthio, $C_{1-4}$-alkylcarbonyl and/or $C_{1-4}$-alkoxycarbonyl,
$R^1$, $R^2$ $R^3$ and $R^4$ independently of one another represents hydrogen, halogen, optionally halogen-substituted alkyl, optionally halogen-substituted alkoxy, nitro, cyano, alkylcarbonyl or alkoxycarbonyl, or two radicals in combination from a benzo radical,
X and Y independently of one another represent oxygen or sulphur and
n represents zero or 1, and a pesticidal active compound selected from the group comprising
A) carbamates and/or
B) carboxylic acid esters, including the naturally occurring and synthetic pyrethroids, and/or
C) phosphoric acid esters and phosphonic acid esters and/or
D) halogenoalkanes.

2. Agents according to Claim 1, characterised in that the weight ratio of benzazoles to the other active compounds is between 0.1 to 10 and 10 to 0.1.

3. Process for combating insects and arachnidae, characterised in that an active compound combination according to Claim 1 is allowed to act on insects and arachnidae and/or their environment.

4. Use of agents according to Claim 1 for combating pests, in particular insects and arachnidae.

5. Process for the preparation of insecticidal and acaricidal agents, characterised in that an agent according to Claim 1 is mixed with extenders and/or surface-active agents.

6. Benzazoles of the formula Ia

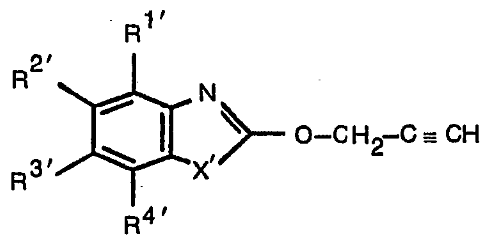

(Ia)

in which
$R^{1'}$, $R^{2'}$, $R^{3'}$ and $R^{4'}$ independently of one another represent hydrogen or halogen, preferably chlorine, at least one of these radicals representing halogen; and
X' represents oxygen or sulphur.